# EUROPEAN PATENT APPLICATION

(11) **EP 1 801 174 A1**
(43) Date of publication of application: **27.06.2007**
(21) Application number: 05816905.3
(22) Date of filing: 16.12.2005
(51) Int. Cl.: C09D 175/04, B05D 7/24, C03C 17/28, C09D 7/12, C09K 3/00

(54) **ANTIFOG ARTICLE, METHOD FOR PRODUCING SAME, AND COATING MATERIAL FOR FORMING ANTIFOG COATING FILM**

(30) Priority: 17.12.2004 JP 2004366551
(71) Applicant: CENTRAL GLASS COMPANY, LIMITED, Ube-shi, Yamaguchi 755-0001 (JP)
(72) Inventor: MURATA, Noboru c/o Glass Research Center of CENTRAL, Mie 515-0001 (JP); HIRUKAWA, Masahiro c/o Glass Research Center of CENTRAL, Mie 515-0001 (JP); HIRANO, Toshihiro c/o Glass Research Center of CENTRAL, Mie 515-0001 (JP)
(74) Representative: Manitz, Finsterwald & Partner GbR
(86) International application number: PCT/JP2005/023133
(87) International publication number: WO 2006/064904

(57) **Abstract**

The present invention relates to a coating agent for forming an antifogging film on a substrate. This coating agent is formed of a solvent and a mixture containing:
(A) an organic isocyanate;
(B) a water-absorbing polyol;
(C) an acryl polyol; and
(D) a surface active agent having an active hydrogen group.

## Description

### TECHNICAL FIELD

The present invention relates to a coating agent for forming an antifogging film, an antifogging article, and a method for producing the same. The antifogging films can be used for antifogging mirrors for bathroom, washroom and the like, and for vehicular and architectural antifogging glasses and mirrors. The antifogging films also can be used for lens, display and the like.

### BACKGROUND OF THE INVENTION

When one surface of a transparent substrate such as glass and plastic drops below a dew point due to a difference in temperature and humidity between an interior and exterior of the substrate, or when an abrupt change of temperature and humidity is brought to the substrate (e.g. when vapor generated from boiled water comes into contact with the substrate or when the environment of the substrate is transferred from a low temperature to a high temperature and humidity), the water content of the atmosphere becomes water drops to adhere to the substrate, so that condensation occurs on the surface of the substrate. As a result of this, a light scattering is encountered by the water drops generated in the condensation. Occurrence of a so-called "fogging" impairs vision, so as to significantly impair safety in common window glasses, vehicular and aircraft front windshields, reflecting mirrors, glasses and sunglasses.

As a method for preventing the occurrence of the "fogging", there is studied various antifogging articles in which an antifogging film is formed on the substrate. In order to accomplish both antifogging property and wear resistance in the obtained film, there is studied an antifogging article utilizing wear resistance exhibited by hydrophilicity of a surface active agent and elasticity of urethane resin. For example, patent document 1 (Japanese Patent Provisional Publication No. 60-85939) discloses an antifogging film in which a surface active agent is contained in a three-dimensional crosslinked structure of urethane resin. However, in the article disclosed in the official gazette, the surface active agent is merely carried in the three-dimensional crosslinked structure. Therefore, the surface active agent is to flow out of the resin as time goes on, thereby bringing a problem of degradation of the antifogging property.

In an antifogging film disclosed in patent document 2 (Japanese Patent Provisional Publication No. 61-502762), a surface active agent having a functional group which reacts with an isocyanate group is introduced into a two package hardening resin of isocyanate having an isocyanate group and of water-absorbing polyvinylpyrrolidone, so as to be bonded to three-dimensional crosslinking of the resin.

In an antifogging film disclosed in patent document 3 (Japanese Patent Provisional Publication No. 60-85939), a surface active agent having a functional group which reacts with an isocyanate group is introduced into a two package hardening resin of isocyanate having an isocyanate group and of a hydrophilic polyol, so as to be bonded to three-dimensional crosslinking of the resin.

In the antifogging articles on which the antifogging film is formed as disclosed in patent documents 1 to 2, the surface active agent is bonded to the three-dimensional crosslinking of a resin having elasticity. Therefore, such antifogging article accomplishes both antifogging persistence and a wear resistance excellent as compared with other resin.

However, such antifogging article obtained by forming the antifogging film from these coating agents for forming the antifogging film is insufficient in wear resistance yet in the use of the vehicular and architectural window glasses and mirrors, which raises some problems where the article cannot sustain a use for a long period of time, for example. Accordingly, in order to surmount these problems the present applicants have provided an antifogging article in which water absorbability and a hydrophilicity of a coating film are suitably controlled as disclosed in patent document 4 (International Publication No. 2004/13063), for example.

### SUMMARY OF THE INVENTION

In order to provide the excellent antifogging article as discussed above at low cost, it is essential to establish a stable manufacturing system. Further, it is required in the antifogging film of the antifogging article to form a relatively thick film (5 to 40 µ m in thickness) in order to make the film exhibit a sufficient water absorbability. Additionally, it is required to maintain the article's original properties such as light-translucency and light-reflection, so that the antifogging article must be made such that the antifogging film does not impair these optical properties.

In view of this, it is necessary to carry out a leveling operation on the substrate after the coating agent is applied to the substrate thereby making the thickness of coating even. The leveling operation is an operation for decreasing a deviation in film thickness. It is because an inadequate leveling brings about an optical distortion. This becomes conspicuous particularly in a case of forming the film relatively thick as discussed above, a case where the size of the substrate is large and a case where the substrate has a curved surface.

Further, shortening of time for the leveling operation is an absolutely necessary task for providing the antifogging article at low cost. For the purpose of the time-shortening, Japanese Patent Provisional Publication No. 60-85939 discloses an introduction of a silicone-based leveling agent to the coating agent, for example. However, the silicone-based leveling agent becomes a factor inhibiting water absorbability and hydrophilicity of the antifogging article, so as to bring about a problem of lowering antifogging property of the article.

An object of the present invention is to provide a coating agent for producing an antifogging film which satisfies antifogging property, wear resistance and the like and allows the time-shortening during the leveling operation, and a method for producing an antifogging article.

In order to accomplish the object of the present invention, a coating agent for forming a urethane-based antifogging film is studied. As a result of this, there is found a coating agent allowing the time-shortening during the leveling operation with which the deviation in film thickness is decreased.

A coating agent for forming an antifogging film, according to the present invention is characterized by being formed of a mixture containing the following (A) to (B) and of a solvent:
(A) an organic isocyanate.
(B) a water-absorbing polyol.
(C) an acryl polyol.
(D) a surface active agent having an active hydrogen group.

### DETAILED DESCRIPTION OF THE INVENTION

A coating agent for forming an antifogging film, according to the present invention will be exemplary discussed hereinafter.

Component (A), an organic isocyanate, serves as a hardening agent and reacts with an active hydrogen group in hydroxyl group, amino group and mercapto group included in components (B) to (D) discussed later, thereby establishing a urethane crosslinking.

Component (B), a water-absorbing polyol, makes a film exhibit mainly a function of absorbing water after the film is formed. The water-absorbing polyol itself may be water-soluble or water-insoluble; however, it is preferable to use a polyoxyalkylene as polyol in view of hardness, wear resistance and the like of the film. The polyoxyalkylene serving as polyol preferably includes an oxyethylene chain having an average molecular weight of 400 to 5,000. The polyol can include the oxyetylene chain, an oxypropylene chain.

The oxyetylene chain has a capability for absorbing water as bound water, and allows the antifogging film to exhibit antifogging property due to water absorbability. Therefore, it is particularly preferable to use the polyol including the oxyethylene chain in view of antifogging property in a low temperature environment, e.g. during wintertime in which an atmosphere temperature is not higher than 5 °C. Additionally, in view of water absorbability, wear resistance, hardness and the like of the antifogging film, a batch of oxyethylene included in the polyoxyalkylene is preferably 10 to 15 wt%, based on the total weight of a urethane component including the organic isocyanate, polyol (the water-absorbing polyol and the acryl polyol) and the surface active agent having the active hydrogen group. Furthermore, for the same purpose as discussed above, the water-absorbing polyol is preferably 5 to 30 wt%, more preferably 10 to 20 wt%, based on the total weight of the urethane component.

Moreover, the polyoxyalkylene serving as polyol preferably has an average molecular weight of 400 to 5,000. The polyoxyalkylene serving as polyol is apt to be degraded in ability to absorb water as the bound water when its average molecular weight is less than 400, while it is apt to bring about malfunctions (such as an insufficient hardening of the coating agent and a degradation of film strength) when its average molecular weight is greater than 5,000. In view of water absorbability, film strength and the like, the average molecular weight is more preferably 400 to 4500.

Particularly in a case where the polyoxyalkylene polyol is polyethylene glycol, it is preferable that the average molecular weight is 400 to 2,000 in view of water absorbability, insufficient hardening and film strength. In a case where the polyol is a copolymer of oxyethylene and oxypropylene, it is preferable that the average molecular weight is 1,500 to 5,000.

Component (C), acryl polyol, contributes to wear resistance and water resistance of the antifogging film, and to shortening of time for the leveling operation with which the film thickness deviation is decreased. The present applicants prepare the water-absorbing polyol and a hydrophobic polyol suitably as disclosed in patent document 4, so as to provide a urethane-based antifogging film having hydrophilicity and water absorbability enough to sustain the use for a long period of time. Additionally, the present applicants use acryl polyol as the hydrophobic polyol, thereby to have succeeded in newly providing such a coating agent as shorten the time for the leveling operation.

Further, the acryl polyol has an effect of lowering a surface friction coefficient of the antifogging film, i.e. an effect of imparting slipping property to a film surface. It is easily assumed that a variety of adherents adheres to the film surface during use of the antifogging film to impair an external appearance and quality of the film, so that wiping is carried out usually in order to remove these adherents. When the film surface is insufficient in slipping property at the wiping operation, malfunctions occur to bring about an extension of time for removing, a poor external appearance due to unevenness in wiping, and the like. The adherents are to be rubbed onto the film surface during the wiping operation, and therefore apt to scratch the film surface when the film surface is poor in slipping property. Further, a cloth for wiping sometimes adheres to the film surface when the film surface is poor in slipping property. A high slipping property of the film surface results in improvement of wear resistance and stain resistance. Thus, slipping property is a vitally important property in practical view.

Usually, introduction of a component for improving wear resistance deteriorates antifogging property of the antifogging film, and makes the film difficult to exhibit the antifogging property particularly in a low temperature environment, e.g. during wintertime. However, acryl polyol brings improvements in slipping property, wear resistance, water resistance and the like to the antifogging film surface without deteriorating the antifogging property of the film.

The acryl polyol preferably has an average molecular weight of 2,000 to 4,000. An acryl polyol having an average molecular weight of less than 2,000 is apt to lower wear resistance of the film, while an acryl polyol having an average molecular weight of larger than 4,000 is apt to lower a coating ability of the coating agent so as to make it difficult to form the film. Additionally, the polyol has three or four hydroxyl groups in view of compactness and hardness of the film which is to be obtained.

Further, the polyol is preferably 10 to 20 wt% based on the total weight of the urethane component. A polyol smaller than 10 wt% makes the obtained film poor in effects of improving wear resistance and water resistance, while a polyol larger than 20 wt% is apt to reduce the obtained film in antifogging property.

Component (D), a surface active agent having an active hydrogen group, mainly contributes to maintaining antifogging property of the obtained film. The antifogging film obtained from the coating agent according to the present invention has water absorbability, so that water is absorbed into the film at the initial stage of expression of antifogging property. This water absorption mainly contributes to the expression of antifogging property. At a stage in which the water absorption reaches saturation, antifogging property is maintained by virtue of a high water film-formability of the surface active agent.

The surface active agent which imparts a high water film -formability to the film is provided with an active hydrogen group which can react with isocyanate, and therefore bonds to a urethane crosslinking after the hardening of the coating agent. With this, the surface active agent is difficult to flow out of the film, thereby contributing to improvement in durability of the antifogging film and to maintainability of antifogging property.

The surface active agent is preferably 15 to 20 wt% based on the total weight of the urethane component. A surface active agent less than 15 wt% is poor in effect of maintaining the antifogging property, while a surface active agent higher than 20 wt% is apt to decrease in film strength.

It is preferable to add a short chain polyol having an average molecular weight of 60 to 200, in addition to the water-absorbing polyol and the hydrophobic acryl polyol. The short chain polyol functions as a chain length-extending agent, thereby improving hardenability of the film without damaging its elasticity after formation of the film. A short chain polyol having an average molecular weight of less than 60 deteriorates the elasticity of the formed film, while a short chain polyol having an average molecular weight of more than 200 lowers hardenability of the formed film.

The antifogging film of the antifogging article is formed such that the coating agent is applied onto the substrate. The film is an antifogging film derived from urethane resin containing an acryl component, a water-absorbing component (preferably including oxyethylene chain) and a surface active agent. When the film suitably contains the acrylic component derived from acryl polyol (or hydrophobic polyol), the water-absorbing component derived from the water-absorbing polyol, and the surface active agent that bonds to a urethane resin crosslinking derived from a surface active agent containing the active hydrogen group, it becomes possible to form an antifogging article including the antifogging film excellent in various kinds of properties, and the substrate.

In the antifogging article excellent in various kinds of properties, the substrate is coated with a coating agent obtained by blending: at least one polyol component of components (B) and (C); a mixture of the active hydrogen group-containing surface active agent; the organic isocyanate discussed as component (A); and a solvent. The applied coating agent is hardened in such a manner as to be set aside under room temperature or in such a manner as to be subjected to a heat treatment of 170 °C, more preferably higher than 180 °C. The antifogging article is thus efficiently obtained.

The coating agent for forming the antifogging film, according to the present invention, allows shortening of time taken for the leveling operation carried out after the coating agent is applied to the substrate in order to decrease the film thickness deviation. This achieves an effect of improving productivity of the antifogging article. Further, the antifogging article formed according to the present invention is excellent in antifogging property, wear resistance, water resistance, and slipping property of the film surface. Therefore, such an antifogging article is high in stain resistance and has an excellent function of antifogging, so as to be usable for a long period of time.

The coating agent for forming the antifogging film, according to the present invention, is an antifogging film-forming coating agent for forming the antifogging film on the substrate. Additionally, the coating agent is a urethane-based coating agent containing: the organic isocyanate; polyol components (such as the water-absorbing polyol and the acryl polyol); the mixture of the active hydrogen group-containing surface active agent; and the solvent.

The organic isocyanate component may be an organic diisocyanate, preferably a biuret obtained from hexamethylenediisocyanate and/or a trifunctional organic polyisocyanate having an isocyanurate structure. Such materials have weather resistance, chemical resistance and heat resistance, and they are effective particularly at providing weather resistance. Other examples of the above-discussed materials are diisophorone diisocyanate, diphenylmethane diisocyanate, bis(methylcyclohexyl) diisocyanate, and toluene diisocyanate.

It is preferable to adjust the ratio of the number of the isocyanate groups included in the organic isocyanate to 0.8 to 2, preferably 0.9 to 1.3, to the number of the active hydrogen groups included in hydroxyl group, mercapto group, amino group and the like (that exist in each component such as the polyol component and the surface active agent). When the ratio of the number of the isocyanate groups is less than 0.8, the coating agent is lowered in hardenability while an unreacted surface active agent flows to be exposed at a surface of the formed film, so that there arises some disadvantages such as sticky feeling of the film. Meanwhile, when the ratio of the number of the isocyanate groups is larger than 2, hardening proceeds so much as to easily lower so that antifogging property.

The surface active agent is a component which provides the film obtained from the coating agent with hydrophilicity to make the coating agent exhibit antifogging property, and has the active hydrogen group (that is a group reactive with isocyanate group, such as hydroxyl group, mercapto group, and amino group). The surface active agent may be cationic type, anionic type, amphoteric type, and nonionic type.

An example of the active hydrogen group-containing surface active agent of anionic type includes castor oil monosulfate, castor oil monophosphate, sorbitan fatty acid ester sulfate, sorbitan fatty acid ester phosphate, sorbitol fatty acid ester sulfate, sorbitol fatty acid ester phosphate, sucrose fatty acid ester sulfate, sucrose fatty acid ester phosphate, polyoxyalkylene castor oil ethermonosulfate, polyoxyalkylene castor oil ether monophosphate, polyoxyalkylene sorbitan fatty acid ester sulfate, polyoxyalkylene sorbitan fatty acid ester phosphate, polyoxyalkylene glycerin ether monosulfate, and polyoxyalkylene glycerin ether monophosphate.

An example of the active hydrogen group-containing surface active agent of cationic type includes dialkanolamine salts, trialkanolamine salts, polyoxyalkylene alkylamine ether salts, trialkanolamine fatty acid ester salts, polyoxyalkylene dialkanolamine ether salts, polyoxyalkylene trialkanolamine ether salts, di (polyoxyalkylene) alkylbenzylalkylammonium salts, alkylcarbamoylmethyldi (polyoxyalkylene) ammonium salts, polyoxyalkylenealkylammonium salts, polyoxyalkylene-dialkylammonium salts, and ricinoleamidepropylethyldimonium ethosulfato.

An example of the active hydrogen group-containing surface active agent of amphoteric type includes N,N-di(β -hydroxyalkyl)-N-hydroxyethyl-N-carboxyalkylammonium betaine, N-β -hydroxyalkyl-N,N-dipolyoxyalkylene-N-carboxyalkylammonium betaine, N-alkyl-N,N-di (polyoxyalkylene) amine dicarboxylic acid monoesters, N-(polyoxypropylene)-N',N'-di (polyoxyethylene)aminoalkyl-N-alkyl-N-sulfoalkylammonium betaine, N,N-di (polyoxyethylene)-N-alkyl-N-sulfoalkyleneammonium betaine, N-(β -hydroxyalkylaminoethyl)-N-(β -hydroxyalkyl) aminoethylcarboxylic acid, N,N'-bis(2-hydroxyalkyl)-N,N'-bis(carboxyethyl) ethylenediamine salts, and N-(β-hydroxyalkyl)-N',N'-di (polyoxyethylene)-N-carboxyethylethylenediamine salts.

An example of the active hydrogen group-containing surface active agent of nonionic type includes polyoxyethylene-polyoxypropylene block polymer, sorbitol fatty acid esters, sorbitan fatty acid esters, sucrose fatty acid esters, polyoxyalkylene sorbitan fatty acid esters, fatty acid monoglycerides, polyoxyalkylene fatty acid monoglycerides, polyglycerin fatty acid esters, polyoxyalkylene castor oil ethers, polyoxyalkylene alkylamines, and polyoxyalkylene alkylamides.

As the active hydrogen group-containing surface active agent, the above-discussed surface active agents may be used singly or in combination.

Acryl polyol contained in the polyol component has an effect of improving the obtained film in wear resistance and water resistance without lowering antifogging property. Additionally, acryl polyol brings about an effect of shortening time for the leveling operation carried out for decreasing the film thickness deviation.

Acryl polyol is available in the market, and obtained by copolymerizing a hydroxy group-containing monomer (such as 2-hydroxyethyl methacrylate, 2-hydroxypropyl methacrylate, 2-hydroxyethyl acrylate, hydroxypropyl acrylate, N-methylol acrylamide) with styrene, methyl methacrylate, ethyl methacrylate, n-butyl methacrylate, isobutyl methacrylate, t-butyl methacrylate, acrylonitrile, methacrylonitrile, methyl acrylate, ethyl acrylate, n-butyl acrylate, isobutyl acrylate, t-butyl acrylate, 2-ethylhexyl acrylate, 2-ethylhexyl methacrylate, or the like.

Further, acryl polyol may be obtained by copolymerizing the hydroxy group-containing monomer with an amino group-containing monomer (such as 2-dimethylaminoethyl methacrylate and t-butylaminoethyl methacrylate), a glycidyl group-containing monomer (such as glycidyl acrylate and glycidyl methacrylate), an amido group-containing monomer (such as acrylamide and methacrylamide), an acid group-containing monomer (such as acrylic acid, methacrylic acid, maleic anhydride, crotonic acid, fumaric acid, and itaconic acid), fumarate, itaconate, or the like.

In addition to the water-absorbing polyol and acryl polyol, the polyol component may further contain a short chain polyol having an average molecular weight of 60 to 200, or alkanolamines such as diethanolamines and triethanolamine, as necessary. It is preferable that the short chain polyol has two or three hydroxyl groups. A short chain having less than two hydroxyl groups may not serve as a skeletal component of the film, so as to be apt to make the film brittle. A short chain having greater than three hydroxyl groups may enhance the reactivity too much, so as to be apt to make the coating agent unstable.

Examples of the short chain polyol include ethylene glycol, propylene glycol, 1,3-propanediol, 1,2-butanediol, 1,3-butanediol, 1,4-butanediol, 2,3-butanediol, 1,5-pentanediol, 2-butene-1,4-diol, 2-methyl-2,4-pentanediol, 2-ethyl-1,3-hexanediol, diethylene glycol, dipropylene glycol, triethylene glycol, glycerol, 2-ethyl-2- (hidroxymethyl)-1,3-propanediol, 1,2,6-hexanetriol, and 2,2≡-thiodiethanol. These polyols may be used singly or in combination, and a copolymer thereof may also be used.

Additionally, the coating agent may contain as necessary: a precursor of a metal oxide such as silica, titania, zirconia, alumina, niobium oxide and tantalum oxide, the precursor including alkoxides (e.g. ethoxides and methoxides), oxyhalides, acetyl-containing compounds and the like; a silane coupling agent such as 3-methacryloxypropyltrimethoxysilane and 3-glycidoxypropyltrimethoxysilane; and fine particles of metal oxide such as silica (e.g. colloidal silica), titania, zirconia, alumina, niobium oxide, and tantalum oxide, the particles having an average particle size of 5 to 50 nm.

The polyol component and the active hydrogen group-containing surface active agent are mixed together, and then the organic isocyanate is added and mixed thereto. Hereupon the isocyanate group is reacted with hydroxyl group, mercapto group and amino group, thereby forming a urethane bond and a urethane resin.

The solvent may be added to each component of the coating agent for forming the antifogging film, or to a mixture of the components. The solvent is required to be a solvent inert to the isocyanate group, so that it is preferably methyl propylene glycol or diacetone alcohol from the viewpoint of compatibility of each component of the coating agent for forming antifogging film or compatibility of a prepared coating agent for forming antifogging film.

Then, the coating agent for forming antifogging film is applied to a substrate. A commonly known example of a method for application includes dip coating, flow coating, spin coating, roller coating, spraying, screen printing, and flexography. After the application, the coating agent for forming antifogging film is set aside under room temperature (e.g. about 20 °C) or subjected to a heat treatment of up to 170 °C to be hardened, thereby forming the antifogging film on the substrate. When the temperature during the heat treatment exceeds 170 °C , there may arise some problems such as carbonization of the urethane resin may occur, thereby lowering the film strength. In order to accelerate the hardening reaction of the coating agent, it is more preferable to carry out the heat treatment within a range of from 80 to 170 °C.

It is preferable to adjust the thickness of the antifogging film after the hardening reaction of the coating agent for forming the antifogging film to about from 5 to about 40 µ m. If it is less than 5 µ m, the antifogging film may become inferior in durability. If it exceeds 40 µ m, the antifogging film may have a problem such as optical distortion in external appearance.

As the substrate to which the coating agent for forming the antifogging film according to the present invention is applied, glass is typically employed. The glass may be in the form of usual glass plate for automotive and architectural uses. The production method of the glass plate may be float method, duplex method, rollout method or the like, and is not particularly limited.

An example of the glass includes: clear and various color glasses (e.g. of green and bronze); various functional glasses (such as UV shielding glass, IR shielding glass and electromagnetic shielding glass); glasses usable for fire-retarding glasses (e.g. wired glass, low-expansion glass, and zero expansion glass); tempered glasses; laminated glasses and multilayer glasses; mirrors produced by silvering and vacuum deposition; and various glass products such as flat and bent glass plates. Although the thickness of the plate is not particularly limited, it is preferably from 1.0 to 10 mm, more preferably from 1.0 to 5.0 mm for vehicular use. The antifogging film may be formed on only one or both surfaces of the substrate. Additionally, the antifogging film may be formed on a part or the entirety of the surface of the substrate.

Additionally, the substrate to which the coating agent for forming the antifogging film according to the present invention is applied is not limited to glass and may be selected from resin films (e.g. of polyethylene terephthalate), resins (e.g. polycarbonate), and metals (particularly metal mirror), and ceramics. Further, in order to improve the article in alkali resistance, a primer layer for improving alkali resistance may be formed on the substrate. This is preferable particularly in a case where the substrate is made of glass.

An example of architectural uses of the antifogging article according to the present invention includes interior mirrors, and mirrors and window glasses for bath room, washroom, etc. An example of vehicular, watercraft and aircraft uses includes window glasses and mirrors such as rearview mirror and door mirror. Further, other examples include: lens of eyeglasses and cameras; goggles; helmet shields; refrigerator showcases; freezer showcases; opening glasses and sight glasses of testers and precision apparatus cases; road reflectors; and displays of mobile communication device such as cellular phone.

### EXAMPLES

Hereinafter, the present invention will be specifically discussed with reference to Examples. Quality evaluations were made on antifogging articles obtained according to each of Examples and Comparative Examples, by the following methods.

[External appearance evaluation] The antifogging article was observed with naked eyes in terms of external appearance, transparency and existence of cracks, and judged as being "Good" if it did not have problems. Those who had problems were judged as being "Not Good".

[Repetitive antifogging property] In accordance with Japanese Industrial Standard (JIS) S 4030 (1983 ed.), "Test methods for antifogging agent of lens of glasses", a test sample was retained in water vapor of warm water of 43 °C for 3 minutes and observed in terms of degree of fogging, and thereafter moved from the water vapor to an environment (temperature: 23 °C; and relative humidity: 63%) and observed in terms of degree of fogging generated by exhalation. This operation completed one cycle. Upon conducting the operation ten cycles, the sample was judged as being "Good" if it had no abnormality in external appearance of the film and did not generate fogging, while judged as being "Not Good" if it generated fogging. This evaluation item is regarded as an indication of maintaining antifogging property.

[Antifogging property at low temperatures] The test sample was made stand still in a refrigerator of 20 °C for 30 minutes and then moved from the refrigerator to an environment (temperature: 23 °C; and relative humidity: 63%). Thereafter, its external appearance including fogging condition, and a degree of fogging generated by exhalation were observed. This operation completed one cycle. Upon conducting the operation ten cycles, the sample was judged as being "Good" if it had no abnormality in external appearance of the film and did not generate fogging, while judged as being "Not Good" if it generated fogging.

[Traverse resistnace] A flannel (a cotton No. 300) was moved on the test sample in a reciprocative manner under a load of 4.9N/4cm² to complete 5,000 reciprocations. The test sample was judged as being "Good" when no abnormality was found in the external appearance and in fogging generated by exhalation, while judged as being "Not Good" when it had some abnormalities.

[Pencil hardness] In accordance with JIS K 5600 (1999 ed.), "Test methods for paint", the surface of film was scratched 5 times with a pencil under a load of 1 kg. A hardness of a pencil which had broken the film less than two times in this test was recorded as a pencil hardness. This pencil hardness is regarded as an indication of scratch resistance.

[Water resistance] The test sample was immersed in water of 23± 2 °C for 1 hour. The test sample was judged as being "Good" if it had no abnormality in external appearance after the immersion and no fogging due to exhalation and if its reduction in pencil hardness was not greater than one rank, while judged as being "Not Good" if its reduction in pencil hardness was not less than two ranks.

[Slipping property evaluation] In accordance with JIS K 7125 (1999 ed.), "Plastics -- Film and sheeting -- Determination of the coefficients of friction", a rectangular slipping piece (having widths of 6.3 cm and a touch area of 40 cm²) was put on the antifogging film under a load of 200 g in a manner that a flannel (a cotton No. 300) covered a bottom surface of the rectangular slipping piece, assuming that the film is to be wiped in practical use. Then, slipping property thereof was measured. Incidentally, the bottom surface of the rectangular slipping piece is where the rectangular slipping piece is brought into contact with the test sample.

The test sample was judged as being "Good" when static friction coefficient drawn from the measurement value was 0.8 or less, while judged as being "Not Good" when static friction coefficient exceeded 0.8. Lower static friction coefficient is preferable in order to improve durability of the film due to the provision of slipping property; however, static friction coefficient can be from 0.4 to 0.8 in order to achieve both slipping property and antifogging property.

[Leveling property evaluation] An evaluation of leveling property is required to be completed in minimal time, in views of productivity, an adherence of lint and the like. The adherence of lint may occur when the film was made stand still in a state of wet for a long period of time, thereby resulting in a poor external appearance. A substrate (100mm X 100mm) was subjected to a coating agent-application treatment and then made stand still. A time was measured with naked eyes until the coating agent applied onto the substrate became free from optical distortion, marks and the like, and became level and smooth. The test sample was judged as being "Good" if the time as discussed above was not longer than 1 minute, while judged as being "Not Good" if the time exceeded 1 minute.

### EXAMPLE 1

### [Preparation of coating agent for forming antifogging film]

A biuret-type polyisocyanate of hexamethylenediisocyanate (available from Sumitomo Bayer Urethane Co. under the trade name of "N3200") was prepared as an organic isocyanate, thereby obtaining coating agent A.

Separately, there was prepared a first solution (available from Film Specialties Co. under the trade name of "VISGARD-A") containing 27wt% of the total of 63 parts by weight of a surface active agent including an isocyanate-reactive group (i.e. a sulfonic acid amine salt) and 37 parts by weight of a water-absorbing polyol (i.e. an ethyleneoxide/propyleneoxide copolymer polyol having an average molecular weight of 2,100 to 4,500). Furthermore, a polyethylene glycol (water-absorbing polyol) having an average molecular weight of 1,000 was prepared. Furthermore, there was prepared a second solution (available from Sumika Bayer Urethane Co., Ltd. under the trade name of "DESMOPHEN A450MPA/X") containing 50 wt% of an acryl polyol.

Then, the above first and second solutions and the above polyethylene glycol were mixed together in a manner to prepare coating agent B containing 60 parts by weight of the total of the sulfonic acid amine salt and the ethyleneoxide/propyleneoxide copolymer polyol, 10 parts by weight of the polyethylene glycol, and 30 parts by weight of the acryl polyol.

Then, 25 g of coating agent A were mixed with 100 g of coating agent B, thereby preparing a mixture. Then, diacetone alcohol was added as a diluting solvent to the mixture of coating agents A and B to adjust the total weight of the urethane components to 35 wt%, thereby preparing a coating agent for forming antifogging film.

### [Formation of antifogging film]

Then, the thus obtained coating agent was applied to a glass plate substrate (obtained by a float method and having the widths of 100mm and thickness of 2mm) by a spin coating. The substrate was kept level immediately after the spin coating and made stand still until any distortion was not observed with naked eyes. When a time was measured by external appearance observation in a leveling operation until marks radially made due to the spin coating disappeared, it was found that the marks disappeared within 1 minute, and that the test sample kept an excellent external appearance even after an antifogging film having a thickness of 16 µm was formed by a heat treatment carried out thereafter at 150 °C and for about 30 minutes.

Additionally, a primer layer was formed on the glass plate substrate in order to improve the article in alkali resistance. The primer layer was obtained with the following procedure.

γ-aminopropyltriethoxysilane (available from Shin-Etsu Chemical Co., Ltd. under the trade name of LS-3150) was prepared with a denatured alcohol (available from Japan Alcohol Trading CO.,LTD under the trade name of "EKINEN F-1") containing 90 wt% of ethanol and 10 wt% of isopropyl alcohol, so as to be 1 wt%. Then, a hydrolysable zirconium compound (i.e. zirconium oxychloride octahydrate) was added thereto such that the ratio of the amount of zirconium contained in the zirconium compound to the amount of silicon contained in silicide was 0.0008 by weight, thereby preparing a solution for forming the primer layer, the solution having a pH of 1.5.

Then, the solution was applied to the float glass substrate in a manner to wipe a surface of the float glass substrate with a wiper made of cellulose (the wiper being available from OZU Corporation under the trade name of "BEMCOT M-1" and having widths of 50 mm), and thereafter dried under room temperature. The surface of the float glass substrate was rinsed with tap water by using the wiper, thereby obtaining the primer layer.

As shown in Table 1, the antifogging article obtained by the above-mentioned method was found to have an antifogging film excellent in various kinds of antifogging properties, wear resistance, and water resistance.

**TABLE 1**

| | | Leveling property | Performance evaluation | | | | | | | |
|---|---|---|---|---|---|---|---|---|---|---|
| | | | External appearance | Antifogging property | | Film strength | | Water resistance | | Slipping property |
| | | | | Repetitive test | Low temperature | Traverse resistance | Pencil hardness | External appearance | Pencil hardness | |
| | 1 | Good | Good | Good | Good | Good | 2H | Good | Good (2H) | Good |
| Example | 2 | Good | Good | Good | Good | Good | 2H | Good | Good (2H) | Good |
| | 3 | Good | Good | Good | Good | Good | H | Good | Good (H) | Good |
| | 1 | Good | Good | Not Good | Not Good | Good | 3H | Good | Good (3H) | Good |
| | 2 | Not Good | Good | Good | Good | Not Good | H | Good | Not Good (2B) | Not Good |
| Comparative Example | 3 | Good | Good | Good | Good | Not Good | HB | Good | Not Good (5B) | Not Good |
| | 4 | Not Good | Good | Good | Good | Good | H | Good | Good (F) | Good |
| | 5 | Good | Good | Not Good | Not Good | Good | 2H | Good | Good (2H) | Good |

### EXAMPLE 2

Each component of coating agent B, discussed in Example 1, was prepared to contain 50 parts by weight of the total of the sulfonic acid amine salt and the ethyleneoxide/propyleneoxide copolymer polyol, 15 parts by weight of the polyethylene glycol, and 15 parts by weight of the acryl polyol. Then, the same operations as Example 1 were carried out with the exception that the amount of coating agent A added to 100 g of coating agent B was adjusted to 43 g, thereby forming an antifogging film having a thickness of 18 µm. Leveling was completed within 1 minute in this example, so that the coating agent obtained in this example was found to be excellent just as Example 1. The thus obtained antifogging article was found from Table 1 to have an antifogging film excellent in various kinds of antifogging properties, wear resistance, and water resistance.

### EXAMPLE 3

Each component of coating agent B, discussed in Example 1, was prepared to contain 75 parts by weight of the total of the sulfonic acid amine salt and the ethyleneoxide/propyleneoxide copolymer polyol, 5 parts by weight of the polyethylene glycol, and 25 parts by weight of the acryl polyol. Then, the same operations as Example 1 were carried out with the exception that the amount of coating agent A added to 100 g of coating agent B was adjusted to 44 g, thereby forming an antifogging film having a thickness of 21 µ m. Leveling was completed within 1 minute in this example, so that the coating agent obtained in this example was found to be excellent just as Example 1. The thus obtained antifogging article was found from Table 1 to have an antifogging film excellent in various kinds of antifogging properties, wear resistance, and water resistance.

### COMPARATIVE EXAMPLE 1

The same operations as Example 1 were carried out with the exception that the acryl polyol alone was selected from each component of coating agent B, and that the amount of coating agent A added to 100 g of coating agent B was adjusted to 34 g, thereby forming an antifogging film having a thickness of 25 µm. The coating agent obtained in this comparative example was found to be excellent in leveling property; however, the antifogging article obtained therefrom did not exhibit any antifogging property as shown in Table 1.

### COMPARATIVE EXAMPLE 2

The first and second solutions and the polyethylene glycol were mixed together such that coating agent B contained 80 parts by weight of the total of the sulfonic acid amine salt and the ethyleneoxide/propyleneoxide copolymer polyol, and 20 parts by weight of the polyethylene glycol were mixed together. The acryl polyol was not added to coating agent B.

Then, the same operations as Example 1 were carried out with the exception that the amount of coating agent A added to 100 g of coating agent B was adjusted to 46 g, thereby forming an antifogging film having a thickness of 19 µm. In this comparative example, it took about 6 minutes to complete leveling, so that the coating agent obtained in this comparative example was found to be inferior in leveling property. Additionally, the thus obtained antifogging article was found from Table 1 to be inferior in external appearance because a cloth adhered to the surface of the film in the traverse resistance test. Further, the article was inferior in slipping property thereby exhibiting a sticky feeling on the surface of the film.

### COMPARATIVE EXAMPLE 3

Coating agent B was prepared to contain "VISGARD-A" alone, in such a manner as not to add the polyethylene glycol serving as a water-absorbing polyol, and the acryl polyol serving as a hydrophobic polyol thereto. The same operations as Example 1 were carried out with the exception that the amount of coating agent A added to 100 g of coating agent B was adjusted to 40 g, thereby forming an antifogging film having a thickness of 22 µm. In this comparative example, it took about 4 minutes to complete leveling, so that the coating agent obtained in this comparative example was found to be inferior in leveling property. Additionally, the thus obtained antifogging article was found from Table 1 to be inferior in external appearance because a cloth adhered to the surface of the film in the traverse resistance test. Further, the article was inferior in water resistance.

### COMPARATIVE EXAMPLE 4

Coating agent B was prepared to contain 5 parts by weight of polycaprolactone diol having an average molecular weight of 1,250, and 5 parts by weight of 1,4-butanediol as a short chain polyol, not to contain the acryl polyol. Then, the same operations as Example 1 were carried out with the exception that the amount of coating agent A added to 100 g of coating agent B was adjusted to 46 g, thereby forming an antifogging film having a thickness of 24 µm. In this comparative example, it took about 5 minutes to complete leveling, so that the coating agent obtained in this comparative example was found to be inferior in leveling property.

### COMPARATIVE EXAMPLE 5

A polyether-modified silicone (available from Nippon Unicar Co. , Ltd. under the trade name of "L-7607N") was added as a leveling agent to the coating agent of Comparative Example 4 to be 0.05 wt% to the coating agent. Thereafter, the same operations as Example 1 were carried out, thereby forming an antifogging film having a thickness of 18 µ m. In this comparative example, leveling was completed within 1 minute; however, the obtained antifogging article was found from the antifogging property evaluation to generate fogging.

## Claims

1. A coating agent for forming an antifogging film on a substrate, comprising a solvent and a mixture containing:
(A) an organic isocyanate;
(B) a water-absorbing polyol;
(C) an acryl polyol; and
(D) a surface active agent having an active hydrogen group.

2. A coating agent for forming an antifogging film, as claimed in Claim 1, wherein the water-absorbing polyol includes a polyoxyalkylene serving as polyol.

3. A coating agent for forming an antifogging film, as claimed in Claim 2, wherein the polyoxyalkylene serving as polyol includes a polyethylene glycol having an average molecular weight of 400 to 2,000.

4. A coating agent for forming an antifogging film, as claimed in Claim 2, wherein the polyoxyalkylene serving as polyol includes a mixture of a polyethylene glycol having an average molecular weight of 400 to 2,000 and an oxyethylene/oxypropylene copolymer polymer having an average molecular weight of 1,500 to 5,000.

5. An antifogging article comprising:
a substrate; and
a urethane-based antifogging film containing a water-absorbing component derived from a water-absorbing polyol, an acryl component derived from an acryl polyol, and a surface active agent bonded to a crosslinking.

6. A method for producing an antifogging article including a substrate and an antifogging film, comprising the steps of:
hardening the coating agent as claimed in any of Claims 1 to 4 after the coating agent is applied to the substrate.
